# DEMANDE DE BREVET EUROPEEN

(11) **EP 1 396 386 A1**
(43) Date de publication de la demande: **10.03.2004**
(21) Numéro de dépôt: 03292207.2
(22) Date de dépôt: 09.09.2003
(51) Int. Cl.: B60R 11/06

(54) **Rangement d'outils pour véhicule automobile**

(30) Priorité: 09.09.2002 FR 0211373
(71) Demandeur: Renault s.a.s., 92100 Boulogne Billancourt (FR)
(72) Inventeur: Cimoli, Patrice, 78340 Les Clayes sous Bois (FR); Josse, Pascal, 78500 Sartrouville (FR)

(57) **Abrégé**

Rangement d'outils pour véhicule automobile, constitué d'au moins un bac (10), qui comporte un fond (11) et des parois (12) délimitant un volume intérieur (13) recevant au moins un outil, caractérisé en ce que l'extérieur (17) du bac (10) comporte au moins un moyen de maintien (18) d'un outil (20) accessible sans démontage dudit bac (10).

## Description

L'invention concerne un rangement d'outils pour véhicule automobile, et plus particulièrement un rangement facilitant l'accès à ces outils.

Dans un véhicule automobile, il est connu d'utilisé des rangements destinés à des outils relatifs à l'entretien simple d'un véhicule automobile, tels que par exemples, un cric et une manivelle destinés au changement d'une roue, afin de ne pas les perdre ou de ne pas créer des zones de rangement disséminées dans le véhicule. En règle générale ce type d'outillage est localisé dans un bac placé dans la roue de secours. Dans ce bac il peut être rangé d'autres outils ou accessoires, tels que par exemple un anneau de remorquage ou un tournevis.

Un tel bac de rangement, nécessite la présence de la roue de secours à l'intérieur du véhicule. Dans le cas ou la roue de secours est localisée à l'intérieur du véhicule celle-ci est placée sous la zone de chargement du véhicule. Un accès aux outils ou accessoires est donc difficile lorsque le véhicule est chargé. L'utilisation, par exemple, d'un anneau de remorquage ou d'outils nécessaires au changement d'une roue se produisant en général dans des situations inattendues, le déchargement de la zone de chargement peut être alors impossible à réaliser voir dangereux.

De plus l'utilisation d'un bac sous la zone de charge, expose le contenu dudit bac à des poussières diverse ou à des liquides, ce qui peut accélérer la corrosion des éléments métalliques et par conséquent la dégradation de ces outils.

Il est parfois utilisé des sangles élastiques pour maintenir en place un outil, tel que par exemple un cric. Ce type de fixation s'use rapidement, par le frottement de ladite sangle sur les arrêtes métalliques du cric, et ne peut maintenir correctement qu'un outil à la fois, ce qui nécessite la multiplication des fixations. De plus un cric étant un élément métallique d'un poids conséquent, ce dernier à tendance à descendre, par l'action des accélérations verticales du véhicule, par exemple par le passage de trous, ce qui engendre des bruits lorsque ledit cric est en butée contre un élément de carrosserie du véhicule. Une possibilité pour limiter le glissement du cric est d'utiliser une sangle élastique plus raide ce qui en rend l'utilisation plus difficile, car la tension nécessaire à exercer est plus importante. De plus le cric ainsi rangé expose les éléments filetées et graissées à la poussière, ce qui peut devenir abrasive ou provoquer des coincements lors de son utilisation.

Afin de pallier ces inconvénients, l'invention a pour objet un rangement d'outils pour véhicule automobile pouvant facilement regrouper l'ensemble des outils nécessaires à un entretien simple tout en permettant de les disposer dans une zone accessible aisément, lorsque le véhicule est chargé sans risque de création de bruits parasites.

L'invention à également pour objet un rangement d'outils pour véhicule automobile comportant un moyen de fixation simple, rapide et résistant.

L'invention à également pour objet un rangement d'outils pour véhicule automobile pouvant donner accès à certain outils ou accessoires sans démontage dudit rangement.

Selon une caractéristique de l'invention, l'extérieur du bac comporte au moins un moyen de maintien d'un outil accessible sans démontage dudit bac.

Selon une autre caractéristique de l'invention, le bac comporte un couvercle.

Selon une autre caractéristique de l'invention, le couvercle comporte des pattes ou empreintes de maintien d'au moins un outil.

Selon une autre caractéristique de l'invention, le couvercle est moulé avec le bac en formant une charnière.

Selon une autre caractéristique de l'invention, le couvercle comporte au moins une patte de fermeture qui coopère avec au moins une butée de verrouillage portée par une paroi du bac.

Selon une autre caractéristique de l'invention, l'outil reçu par le moyen de maintien est un anneau de remorquage.

Selon une autre caractéristique de l'invention, l'intérieur du bac reçoit un cric.

Selon une autre caractéristique de l'invention, le bac comporte une patte de fixation recevant un moyen de fixation à un élément de la carrosserie du véhicule.

Selon une autre caractéristique de l'invention, le bac comporte une patte de positionnement qui coopère avec un orifice de réception.

Selon une autre caractéristique de l'invention, la patte de positionnement est portée par le couvercle.

Selon une autre caractéristique de l'invention, le moyen de fixation est une vis ou un écrou qui comporte une molette.

Selon une autre caractéristique de l'invention, le rangement est disposé verticalement le long d'une paroi délimitant une zone de chargement du véhicule.

Selon une autre caractéristique de l'invention, le bac comporte une étiquette explicative de l'utilisation d'au moins un outil porté par ledit bac.

D'autres caractéristiques et avantages de l'invention apparaîtront à la lecture de la description d'exemples de réalisation d'un rangement d'outils pour véhicule automobile aux dessins annexés dans lequel :
- La figure 1 représente un exemple de disposition du rangement selon l'invention sur un coté du véhicule.
- La figure 2 représente une section longitudinale du rangement selon l'invention.
- La figure 3 représente le rangement avec le couvercle en position ouverte.

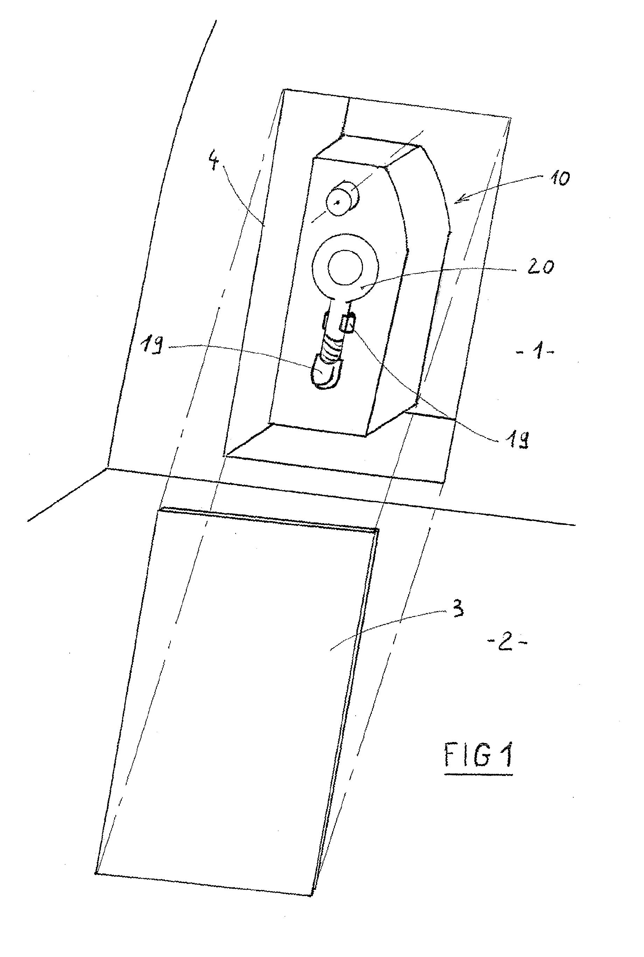

Dans la description qui suit le terme outil peut non seulement signifier des outils classiques, tels que par exemple un tournevis, une manivelle ou un cric, mais peut également comprendre des accessoires comme par exemple un anneau de remorquage, une clé pour antivol de roue ou un nécessaire de réparation des crevaisons. Tel que représenté à la figure 1, le rangement pour outils est fixé sur une paroi verticale 1 du véhicule, et plus particulièrement dans notre exemple de réalisation sur une partie de la carrosserie qui délimite la zone de chargement 2. Le rangement peut être visible ou dissimulé sous un couvercle 3 formé par une partie de l'habillage 4 de la carrosserie. Cet agencement représenté à la figure 1 n'est qu'un exemple, et il peut être prévu dans tout autres zones du véhicule pouvant être facilement accessibles et selon n'importe quelle orientation.

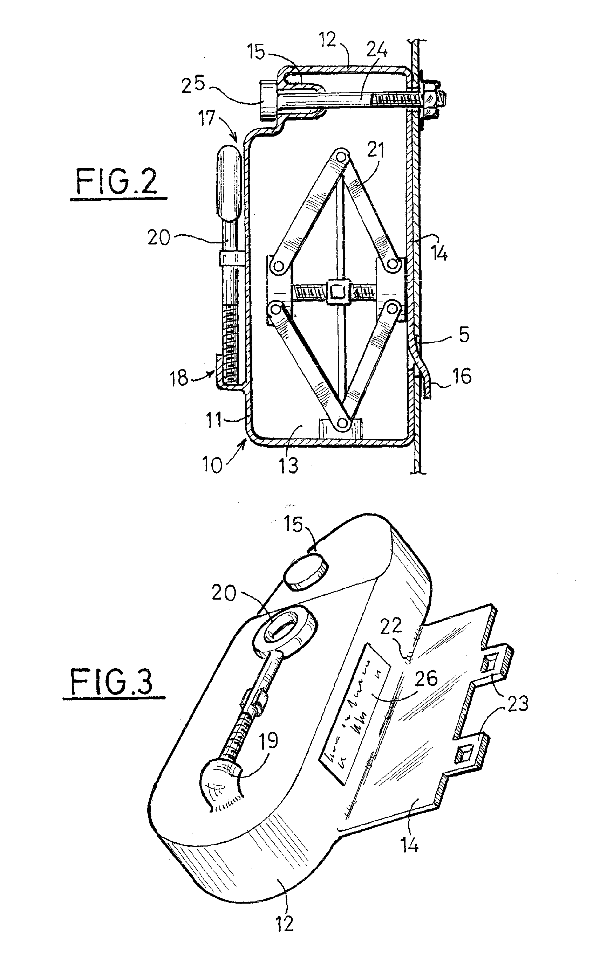

Tel que représenté à la figure 2, le rangement d'outils est constitué d'un bac 10, comprenant un fond 11 et des parois 12 délimitant un volume intérieur 13 fermé, partiellement ou totalement, par un couvercle 14, au moins une patte de fixation 15 et éventuellement une patte de positionnement 16.

Le bac 10 comporte sur sa partie extérieure 17, et plus particulièrement dans notre exemple de réalisation sur le fond 11, au moins un moyen de maintien 18, formé par des pattes et/ou des empreintes 19, d'au moins un outil 20 devant être accessible rapidement, et qui ne nécessite pas l'utilisation des autres outils disponibles dans le rangement. Un tel outil 20 peut être par exemple un anneau de remorquage. Les pattes de maintien 19 exercent un effort de retenu de l'outil 20 par élasticité et sont disposées de manière à immobiliser correctement ledit outil 20.

L'intérieur 13 du bac 10 comporte des pattes et/ou des empreintes de maintien, non représentées, d'au moins un outil 21, tel que par exemple un cric. Tel que représenté à la figure 3, le couvercle 14, qui dans notre exemple de réalisation est moulé avec le reste du bac 10, est articulé autour de la jonction 22 avec ledit bac 10 afin de former une charnière. Le couvercle 14 peut comporter également des moyens pouvant recevoir des outils ou partie d'un outil. Le couvercle 14 comporte, sur le coté opposé de la charnière, des pattes de fermetures 23 qui coopèrent avec des butées de verrouillages, non représentées, portées par une paroi du bac 10.

La patte de fixation 15 est destinée à recevoir un moyen de fixation 24, formé d'une vis ou d'un écrou qui coopère respectivement avec un écrou ou un goujon fileté fixé sur la carrosserie du véhicule. Afin d'améliorer la préhension du moyen de fixation 24 ce dernier comporte une molette 25 de grosse dimension. Dans le but d'éviter de perdre le moyen de fixation 24 lors du démontage du rangement, ledit moyen de fixation 24 est lié à la patte de fixation tout en autorisant sa rotation.

Dans le terme patte de fixation 15 il pourra être compris également une réalisation sous la forme d'un lamage, effectué directement dans le fond du bac ou sur une autre partie de celui-ci, recevant le moyen de fixation 24.

La patte de positionnement 16 coopère avec un orifice de réception 5 ou un crochet, afin que le rangement puisse prendre appui sur une butée basse et soulager ainsi la patte de fixation 15. La patte de positionnement 16 peut-être directement réalisée dans une partie du couvercle 14.

Le bac 10 comporte sur une de ces faces extérieures 11, 12 une étiquette 26 montrant le contenu dudit rangement et/ou une notice d'utilisation d'un ou plusieurs outils.

Le bac 10 peut comporter un élément ou une empreinte formant une poignée de transport, non représentée.

Lors de l'utilisation d'un outil 20 localisé à l'extérieur du bac 10 il est juste nécessaire d'ouvrir le couvercle d'habillage 3 pour avoir accès à cet outil 20.

Dans le cas d'une utilisation d'un outil 21 localisé à l'intérieur 13 du bac 10 ou dans le couvercle 14, il suffit d'ouvrir ou d'enlever le couvercle d'habillage 3, de dévisser le moyen de fixation et d'extraire le rangement pour l'emmener.

Pour le mettre en position le rangement sur la paroi verticale 1 il suffit de placer la patte de positionnement 16 dans l'orifice de réception 5 et de faire coïncider le moyen de fixation 24 avec l'élément fixer sur la carrosserie destiné à le recevoir. La mise en place du couvercle d'habillage 3 permet de dissimuler le rangement d'outils.

## Revendications

1. Rangement d'outils pour véhicule automobile, constitué d'au moins un bac (10), qui comporte un fond (11) et des parois (12) délimitant un volume intérieur (13) recevant au moins un outil, **caractérisé en ce que** l'extérieur (17) du bac (10) comporte au moins un moyen de maintien (18) d'un outil (20) accessible sans démontage dudit bac (10).

2. Rangement selon la revendication 1, **caractérisé en ce que** le bac (10) comporte un couvercle (14).

3. Rangement selon la revendication 2, **caractérisé en ce que** le couvercle (14) comporte des pattes ou empreintes de maintien d'au moins un outil.

4. Rangement selon l'une quelconque des revendications 2 à 3, **caractérisé en ce que** le couvercle (14) est moulé avec le bac (10) en formant une charnière.

5. Rangement selon l'une quelconque des revendications 2 à 4, **caractérisé en ce que** le couvercle (14) comporte au moins une patte de fermeture (23) qui coopère avec au moins une butée de verrouillage portée par une paroi du bac (10).

6. Rangement selon l'une quelconque des revendications 1 à 5, **caractérisé en ce que** l'outil (20) reçu par le moyen de maintien (18) est un anneau de remorquage.

7. Rangement selon l'une quelconque des revendications 1 à 6, **caractérisé en ce que** l'intérieur (13) du bac (10) reçoit un cric.

8. Rangement selon l'une quelconque des revendications 1 à 7, **caractérisé en ce que** le bac (10) comporte une patte de fixation (15) recevant un moyen de fixation (24) à un élément de la carrosserie du véhicule.

9. Rangement selon l'une quelconque des revendications 1 à 8, **caractérisé en ce que** le bac (10) comporte une patte de positionnement (16) qui coopère avec un orifice de réception (5).

10. Rangement selon la revendication 9, **caractérisé en ce que** la patte de positionnement (16) est portée par le couvercle (14).

11. Rangement selon l'une quelconque des revendications 8 à 10, **caractérisé en ce que** le moyen de fixation (24) est une vis ou un écrou qui comporte une molette (25).

12. Rangement selon l'une quelconque des revendications 1 à 11, caractérisé en qu'il est disposé verticalement le long d'une paroi (1) délimitant une zone de chargement (2) du véhicule.

13. Rangement selon l'une quelconque des revendications 1 à 12, **caractérisé en ce que** le bac (10) comporte une étiquette (26) explicative de l'utilisation d'au moins un outil porté par ledit bac (10).
